# EUROPÄISCHE PATENTANMELDUNG

(11) **EP 4 775 695 A1**
(43) Veröffentlichungstag der Anmeldung: **15.07.2026**
(21) Anmeldenummer: 25151749.6
(22) Anmeldetag: 14.01.2025
(51) Int. Cl.: C21D 1/52, B21B 45/00, B21J 1/06, C01B 33/20, C08K 3/34, C09D 7/61, C21D 1/70, C21D 8/00, C21D 8/02, C21D 9/00, C23C 20/00, C23C 28/00, F27B 9/00, C09D 5/08, C01B 33/14, C23F 11/00, C09D 1/00, C09D 7/40

(54) **VERFAHREN ZUM WÄRMEBEHANDELN VON STAHLPRODUKTEN AUF FORMGEBUNGSHITZE**

(71) Anmelder: ThyssenKrupp Steel Europe AG, 47166 Duisburg (DE)
(72) Erfinder: Junge, Fabian, 47166 Duisburg (DE); Schaffner, Tobias, 47166 Duisburg (DE)
(74) Vertreter: ThyssenKrupp Steel Europe AG

(57) **Zusammenfassung**

Die Erfindung betrifft ein Verfahren zum Wärmebehandeln von Stahlprodukten (1) auf Formgebungshitze.

## Beschreibung

Die Erfindung betrifft ein Verfahren zum Wärmebehandeln von Stahlprodukten auf Formgebungshitze.

Im Rahmen der weltweit geforderten Dekarbonisierung sollen mit fossilen Brennstoffen betriebene Anlagen in Zukunft auf umweltfreundlichere Brennstoffe bzw. Energieträger, wie zum Beispiel Wasserstoff und/oder Ammoniak, umgerüstet bzw. umgestellt werden, um somit den Einsatz von fossiler Energie zu reduzieren oder letztendlich ganz zu vermeiden und damit wiederrum verbunden eine Reduzierung des CO₂-Ausstoßes zu erzielen.

Bei einer Direktverbrennung von Wasserstoff und/oder Ammoniak als Brenngas oder Anteilen von Wasserstoff und/oder Ammoniak im Brenngas kommt es infolge der Verbrennungsreaktionen mit Luft und/oder Sauerstoff zu einer höheren Ofenfeuchte respektive einem höheren Wasserdampfpartialdruck in der Ofenatmosphäre im Vergleich zu einer konventionellen Erdgasverbrennung. Infolge des höheren Wasserdampfpartialdrucks ist ein ungewollter dickerer und festhaftender Zunder auf dem Stahlprodukt mithin nicht ausschließbar. Zudem können Änderungen in der Rohstahlerzeugung, durch beispielsweise den geplanten Einsatz von höheren Schrottmengen, zu einem verstärkten Einbringen von Begleitelementen führen. Diese beiden Einflussgrößen führen zur Ausbildung, von dickerem und fester haftendem Zunder, bis hin zur Ausbildung von sogenanntem Klebezunder. Ohne Gegenmaßnahme würde dies zu einem höheren Materialverlust (Zunderausbildung und erforderliche Zunderentfernung), und/oder Effektivitätsverlust (infolge höherer Entzunderungszeiten/zusätzlicher Bearbeitungsschritte) führen. Zudem könnten verminderte Oberflächenqualitäten infolge der Zunderausbildung und Zunderentfernung resultieren.

Aufgabe der vorliegenden Erfindung ist es, das Verfahren zum Wärmebehandeln von Stahlprodukten auf Formgebungshitze derart weiterzuentwickeln, bei welchem positiv Einfluss auf die Zunderbildung genommen werden kann.

Diese Aufgabe wird gelöst durch ein Verfahren mit den Merkmalen des Anspruchs 1. Weiterführende Ausgestaltungen sind in den Unteransprüchen beschrieben.

Die Lehre betrifft ein Verfahren zum Erwärmen eines Stahlprodukts auf Formgebungshitze, wobei das Erwärmen des Stahlprodukts in einem Ofen mit einer direkt befeuerten Ofenkammer oder mit einem direkt befeuerten Teilabschnitts einer Ofenkammer durchgeführt wird, wobei die Temperatur des Stahlprodukts beim Entnehmen aus dem Ofen zwischen 950 °C und 1400 °C beträgt, wobei der Ofen mehrere Brenner umfasst, welche mit einem Brenngas mit einem Anteil von 0 Vol.-% bis 100 Vol.-% Wasserstoff und/oder Ammoniak und einem sauerstoffhaltigen Gas betrieben werden und daraus ein Rauchgas erzeugt wird, welches die Ofenkammer oder den Teilabschnitt der Ofenkammer füllt.

Wesentlich für die Erfindung ist, dass vor dem Eintreten in die direkt befeuerte Ofenkammer oder in den direkt befeuerten Teilabschnitt der Ofenkammer auf die Oberfläche des Stahlprodukts zumindest abschnittsweise eine Schicht mit hygroskopischen Feststoffen, enthaltend oder bestehend aus Silikaten, Oxiden oder Mischungen daraus aufgetragen wird.

Vorzugsweise kann auf die Oberfläche des Stahlprodukts vollständig eine Schicht mit hygroskopischen Feststoffen, enthaltend oder bestehend aus Silikaten, Oxiden oder Mischungen daraus aufgetragen werden.

Die hygroskopischen Feststoffe enthalten oder bestehen aus Silikaten, Oxiden oder Mischungen daraus. Bei Silikaten kann es sich beispielsweise um Magnesiumsilikat, Natriumsilikat, Calciumsilikat, Zirkonsilikate, Wasserglas, Talk, Tonminerale und Mischungen daraus handeln. Bei Oxiden kann es sich beispielsweise um Magnesiumoxid, Calciumoxid, Aluminiumoxid, Siliziumoxid, Eisen(III)-oxid, Zinkoxid und Mischungen daraus handeln. Auch kann es sich um Mischungen aus einem oder mehreren Silikaten und einem oder mehreren Oxiden handeln.

Eine Umstellung von einem fossilen Brennstoff (Erdgas) auf einen alternativen, vorzugsweise wasserstoffhaltigen und/oder ammoniakhaltigen Brenngas in einer direkt befeuerten Ofenkammer oder einem direkt befeuerten Teilabschnitt einer Ofenkammer eines Ofens zum Wärmebehandeln eines Stahlprodukts auf Formgebungshitze bewirkt somit eine geänderte Ofenatmosphäre, welche signifikante Auswirkungen auf die Stoffeigenschaften und Oberfläche des Stahlprodukts nimmt. Beim Verbrennen von wasserstoffhaltigen und/oder ammoniakhaltigen Brenngasen, welche beispielsweise Anteile von Wasserstoff zwischen >0 und 100 Vol.-% aufweisen, wird eine im Vergleich zum Erdgas größere Menge an Wasserdampf erzeugt, was dafür sorgt, dass ein höherer Wasserdampfpartialdruck in der Ofenatmosphäre vorliegt. Dies hat zur Folge, dass nicht nur eine höhere Tendenz zur Oxidation (= Zunderbildung) während des Durchwärmens durch sauerstoffaffine Elemente im Stahlprodukt gegeben ist, sondern sich dadurch auch ein festhaftender Zunder ausbildet.

Auf der Oberfläche des Stahlprodukts kann durch die Verbrennung des wasserstoffhaltigen und/oder ammoniakhaltigen Brenngases eine oxidierende Atmosphäre bereitgestellt werden, wodurch sich eine Schicht aus Eisenoxiden auf dem Stahlprodukt ausbilden kann, welche eine Matrix aus Wüstit und Phasen aus Magnetit und Hämatit umfasst. Unter Umständen kann sich eine im Wesentlichen deckende Schicht aus Hämatit ausbilden, welche eine chemische Abtragung, insbesondere Beizung, ebenfalls erschwert bzw. unmöglich macht.

Einer Erhöhung des Wasserstoffs und/oder Ammoniaks im Brenngas und somit respektive einer Erhöhung des Wasserdampfpartialdrucks im daraus resultierenden Rauchgas muss dahingehend gegensteuert werden, dass das Rauchgas durch eine gezielte Verschiebung der thermodynamischen Prozesse in der Ofenkammer beeinflusst wird, insbesondere Einfluss auf die chemische Reaktion zwischen Wasserdampf und Stahlprodukt genommen wird. Durch das Auftragen einer zumindest abschnittsweisen Schicht mit hygroskopischen Feststoffen, enthaltend oder bestehend aus Silikaten, Oxiden oder Mischungen daraus auf der Oberfläche des Stahlprodukts, kann positiv Einfluss auf die Zunderausbildung genommen werden.

Es ist bekannt, dass hygroskopische Feststoffe in einer feuchten Atmosphäre Feuchtigkeit entziehen, wobei diese Feststoffe in einer Umgebung die Feuchtigkeit bei etwa Raumtemperatur aufnehmen und zwischen ca. 90 bis 400 °C wieder abgeben, um dadurch diese Feststoffe sozusagen wieder zu regenerieren. Damit scheinen diese für einen Hochtemperatureinsatz prinzipiell nicht geeignet zu sein.

Umso überraschender hat sich mithin herausgestellt, dass eine zumindest abschnittsweise auf der Oberfläche des Stahlprodukts aufgetragene Schicht mit hygroskopischen Feststoffen, durchaus eine Reduzierung der Zunderbildung und/oder Änderung der Zunderstruktur in einer wasserstoff- und/oder ammoniakhaltigen Ofenatmosphäre bewirken kann. Hintergrund dieses Effekts ist zum einem die Barrierewirkung der zumindest abschnittsweise aufgetragenen Schicht, welche eine freie Oxidations- und/oder Adsorptionsreaktion an der Oberfläche hemmen kann, und zum anderen auf zusätzliche Absorptionseffekte der hygroskopischen Feststoffe mit der feuchten Ofenatmosphäre selbst zurückzuführen ist. Dies führt zwar nicht zur vollständigen Verhinderung der Zunderausbildung, hat aber den Vorteil diese signifikant zu reduzieren bzw. eine Ausbildung von sogenanntem Klebezunder zu verhindern. So kann der Einsatz von hygroskopischen Feststoffen zur Ausbildung von zusätzlichen Phasen oder Fremdphasen und somit zu einer Änderung der Zunderstruktur führen, wodurch der Zunder spröder wird und dadurch im Folgeprozess leichter abgetragen werden kann. Die zusätzlichen Phasen oder Fremdphasen können auch als "Sollbruchstellen" dienen und können zu einer Schwächung des Zunders und damit zu einem vereinfachten Abtrag führen.

Der zumindest anteilsmäßige im Brenngas zum Einsatz kommende Wasserstoff kann beispielsweise in einer Wasserelektrolyse unter Verwendung regenerativer Energien, wie Wind, Wasser und/oder Sonne, erzeugt und bereitgestellt werden. Da Wasserstoff zukünftig mit hoher Wahrscheinlichkeit überwiegend in Form von Ammoniak importiert werden wird, muss dieses zunächst gecrackt, also in Wasserstoff aufgespalten werden. Dieser Schritt ist energieintensiv und das Ammoniak lässt sich in einem Schritt nicht zu 100 % in Wasserstoff umsetzen. Die Kosten-Nutzenabwägung wird zu sehr teurem, reinen Wasserstoff, Ammoniakrückständen im Wasserstoff bis hin zu Wasserstoff/Ammoniak-Mischungen in großtechnischen Prozessgasen führen.

Der Ofen mit seiner direkt befeuerten Ofenkammer oder mit seinem direkt befeuerten Teilabschnitt einer Ofenkammer kann derart ausgestaltet sein und entsprechende Mittel aufweisen, mit denen es möglich ist, das wärmezubehandelnde Stahlprodukt entweder im Wesentlichen kontinuierlich oder nahezu kontinuierlich durch den Ofen hindurchzuführen oder vorzugsweise diskontinuierlich, d.h. das ein Stahlprodukt in den Ofen hineingeführt wird, dort bis zum Erreichen der Formgebungshitze verbleibt und anschließend den Ofen verlässt, um einem Formgebungsprozess im warmen Zustand zugeführt zu werden.

Der Ofen kann eine Ofenkammer mit einer direkten Befeuerung oder auch mehrere Ofenkammern, wobei mindestens eine davon direkt befeuert ist oder auch mehrere direkt befeuert sein können, aufweisen. Der Ofen kann aber auch eine oder mehrere Ofenkammern aufweisen, wobei mindestens ein Teilabschnitt mindestens einer Ofenkammer direkt befeuert ist.

Eine Dekarbonisierung in einem Ofen mit einer direkt befeuerten Ofenkammer oder mit einem direkt befeuerten Teilabschnitt einer Ofenkammer zum Wärmebehandeln eines Stahlprodukts auf Formgebungshitze wäre somit nicht nur ein einfacher Wechsel von fossilen zu nichtfossilen Brennstoffen, sondern beinhaltet auch eine komplexe Beeinflussung der Produktparameter.

Die Bestimmung respektive Erfassung einer Ofenfeuchte bzw. eines Wasserdampfpartialdrucks in einer Ofenatmosphäre ist dem Fachmann geläufig. Dies kann beispielsweise durch Messung des Taupunktes mit geeigneten Messeinrichtungen erfolgen.

Das Wärmebehandeln eines Stahlprodukts auf Formgebungshitze erfolgt in der Art, dass die Temperatur des Stahlprodukts beim Entnehmen aus dem Ofen zwischen 950 °C und 1400 °C beträgt, insbesondere mindestens 1000 °C, vorzugsweise mindestens 1050 °C, bevorzugt mindestens 1100 °C, weiter bevorzugt mindestens 1150 °C. Die Temperatur von 1400 °C sollte nicht überschritten werden, um ein partielles Aufschmelzen und/oder zu starke Verzunderung des Stahlprodukts zu vermeiden. Aus ökologischen und ökonomischen Gründen wird die Temperatur insbesondere auf maximal 1350 °C, vorzugsweise auf maximal 1330 °C beschränkt. Gemessen wird die Temperatur beispielsweise an einer Seite auf der Oberfläche des Stahlprodukts, insbesondere mit Pyrometer oder anderen geeigneten Messmittel. Somit kann die Temperatur des Stahlprodukts mit dem Fachmann bekannten Mitteln erfasst werden. Die Temperatur in der Ofenkammer respektive die Temperatur der Atmosphäre in der Ofenkammer kann durchaus höher liegen.

Das Stahlprodukt kann in Form einer Bramme, eines Blockes, eines Knüppels oder einer Scheibe vorliegen.

Das Stahlprodukt kann aus einem Kohlenstoffstahl bestehen.

Die hygroskopischen Feststoffe können in einer Suspension, insbesondere in einer wässrigen Suspension, und/oder in einer Dispersion, insbesondere in einer wässrigen Dispersion zumindest abschnittsweise, vorzugsweise vollständig, auf die Oberfläche des Stahlprodukts aufgetragen werden.

Die hygroskopischen Feststoffe können in einer Suspension, insbesondere in einer wässrigen Suspension, mit einer Teilchengröße zwischen 1 und 100 µm, als feine Suspension, oder mit einer Teilchengröße zwischen 101 und 1000 µm, als grobe Suspension, aufgetragen werden. Die hygroskopischen Feststoffe können in einer Dispersion insbesondere in einer wässrigen Dispersion mit einer Teilchengröße kleiner als 1 µm aufgetragen werden. Des Weiteren ist auch eine Mischung der vorgenannten Teilchengrößen denkbar.

Bevorzugt können die hygroskopischen Feststoffe in einer Konzentration von 30 g/l bis 2000 g/l, Rest Wasser und unvermeidbare Verunreinigungen aufgetragen werden. Die Konzentration kann insbesondere mindestens 50, 70 g/l, vorzugsweise mindestens 100, 120 g/l, bevorzugt mindestens 150, 170 g/l, besonders bevorzugt mindestens 200, 220 g/l, weiter bevorzugt mindestens 250, 270 g/l, und insbesondere maximal 1800, 1600 g/l, vorzugsweise maximal 1400, 1500 g/l, bevorzugt maximal 1200, 1100 g/l betragen.

Alternativ können auch kohlenstoffbasierte Lösungsmittel wie Öle, Alkohole, Stärke, Zellulose oder Mischungen daraus aufgetragen werden, in welchen die hygroskopischen Feststoffe dispergiert sind.

Weiter alternativ können auch klebstoffbasierte Lösungen, enthaltend oder bestehend aus Epoxidharz, Polyurethan, Acrylat, Silikon, Kautschuk oder Mischungen daraus aufgetragen werden, in welchen die hygroskopischen Feststoffe dispergiert sind.

Dabei kann die Schicht mit hygroskopischen Feststoffen eine Dicke (nach Auftrag) zwischen 1,0 µm und 5000 µm aufweisen. Die Dicke kann insbesondere mindestens 10,0 µm, vorzugsweise mindestens 25,0 µm, insbesondere maximal 4000 µm, vorzugsweise maximal 2500 µm betragen. Die Dicke kann bevorzugt maximal 2000 µm, weiter bevorzugt maximal 1500 µm betragen.

Der Prozess zum Auftragen kann mit geeigneten Einheiten erfolgen, ist demnach Stand der Technik und damit dem Fachmann geläufig. Das Auftragen kann mittels Sprühen, Tauchen, Pinseln oder Coaten erfolgen.

Nach dem zumindest abschnittsweisen, vorzugsweise vollständigen Auftragen und vor dem Eintreten kann optional auch eine Trocknung durchgeführt werden. Bei der Trocknung können flüchtige Bestandteile entweichen und es verbleibt eine teilweise oder vollständige getrocknete Schicht aus Feststoffen auf der Oberfläche des Stahlprodukts.

Um die Wärmeeinkopplung zu verbessern, kann in der Schicht zusätzlich eine farbgebende Komponente enthalten sein, mit welcher ein dunkler Farbton der Schicht erreicht werden kann. Beispielsweise können Ruß, Kohlenstoff, Eisenoxid und/oder Manganoxid zugegeben werden. Die farbgebende Komponente kann mit einem Anteil zwischen 0,1 und 20 Gew.-%, insbesondere bis zu 15 Gew.-%, vorzugsweise bis zu 10 Gew.-% in der Schicht enthalten sein.

Je nach Volumen des durchzuwärmenden Stahlprodukts, und insbesondere auch abhängig von der Ziel-Formgebungstemperatur, kann eine Verweilzeit in der Ofenkammer oder in dem Teilabschnitt der Ofenkammer zwischen 10 Minuten und 48 Stunden betragen, insbesondere zwischen 30 Minuten und 30 Stunden, vorzugsweise zwischen 1 Stunde und 24 Stunden.

Der Ofen mit der direkt befeuerten Ofenkammer oder mit dem direkt befeuerten Teilabschnitt der Ofenkammer zum Wärmebehandeln eines Stahlprodukts auf Formgebungshitze kann ein Stoßbalkenofen oder ein Hubbalkenofen sein, welcher zur Aufnahme und Durchwärmen von Brammen, Blöcken oder Knüppel ausgelegt ist. Hier kann je nach Volumen des wärmezubehandelnden Stahlprodukts beispielsweise eine Verweilzeit zwischen 30 min und 15 Stunden in Betracht gezogen werden.

Alternativ kann der Ofen zum Wärmebehandeln eines Stahlprodukts auf Formgebungshitze ein Rollenherdofen sein, welcher zur Aufnahme und Durchwärmen von Schmiedeteilen ausgelegt ist. Hier kann je nach Volumen des wärmezubehandelnden Stahlprodukts beispielsweise eine Verweilzeit zwischen 2 Stunden und 18 Stunden in Betracht gezogen werden.

Aus einem erschmolzenen Stahl oder einer erschmolzenen Stahllegierung wird ein Stahlprodukt zu einer Bramme, einem Block oder einem Knüppel vergossen. Am Beispiel einer bekannten Stranggießanlage wird ein geschmolzener Stahl respektive eine geschmolzene Stahllegierung klassisch über eine Kokille gegossen und vollständig zu einem Strang erstarrt, welcher abgezogen und zu mehreren Brammen endlicher Abmessung abgetrennt wird, wobei abschließend zugelassen wird, dass sich die Brammen durch insbesondere natürliche Abkühlung auf Umgebungstemperatur abkühlen. Die Brammen werden zum Weiterverarbeiten beispielsweise in einem Hubbalkenofen oder in einem Stoßofen auf Formgebungshitze, somit bevorzugt auf Walzhitze, (wieder-)erwärmt und durchgewärmt. Die Formgebung umfasst bevorzugt ein Warmwalzen in einem Warmwalzwerk, welches mindestens ein Warmwalzgerüst oder vorzugsweise mehrere, bevorzugt bis zu sieben Warmwalzgerüst in einer Warmwalzstaffel umfassen kann, wobei optional ein oder mehrere, beispielsweise bis zu drei Vorwalzgerüste vor einem Warmwalzgerüst respektive einer Warmwalzstaffel in Prozessrichtung angeordnet sein kann oder können.

Alternativ kann die Formgebung auch ein Schmieden umfassen, so dass das Wärmebehandeln des Stahlprodukts in einem Ofen somit auf Schmiedehitze erfolgt.

Die Prozesse zum Wärmebehandeln von Stahlprodukten in Form von Brammen, Blöcken oder Knüppel auf Formgebungshitze und somit auch der Aufbau entsprechender Öfen sind Stand der Technik und dem Fachmann damit geläufig.

insbesondere kann Wasserstoff und/oder Ammoniak im Brenngas mit einem Anteil von mindestens 10, 20 Vol.-% enthalten sein. Vorzugsweise kann Wasserstoff und/oder Ammoniak im Brenngas mit einem Anteil von mindestens 30, 40 Vol.-% enthalten sein. Bevorzugt kann Wasserstoff und/oder Ammoniak im Brenngas mit einem Anteil von mindestens 50, 60 Vol.-% enthalten sein. Besonders bevorzugt kann Wasserstoff und/oder Ammoniak im Brenngas mit einem Anteil von mindestens 70, 80 Vol.-% enthalten sein. Weiter bevorzugt kann Wasserstoff und/oder Ammoniak im Brenngas mit einem Anteil von mindestens 98 Vol.-% enthalten sein. Eine Ausgestaltung umfasst beispielsweise einen 100%-igen Einsatz von Wasserstoff und/oder Ammoniak, mit anderen Worten, das Brenngas besteht aus 100 Vol.-% Wasserstoff und/oder Ammoniak oder nahezu 100 Vol.-%, wobei Verunreinigungen im Brenngas bis zu 0,5 Vol.-%, insbesondere bis zu 0,2 Vol.-%, vorzugsweise weniger als 0,1 Vol.-% zugelassen werden, wobei Verunreinigungen technisch nicht oder nur mit hohem apparativem Aufwand vermieden werden können.

Wenn das Brenngas nicht vollständig aus Wasserstoff und/oder Ammoniak besteht, können neben Wasserstoff und/oder Ammoniak weitere Anteile an Methan (CH₄) und/oder Kohlenmonoxid (CO) enthalten sein, um 100 Vol.-% nebst Verunreinigungen, welche bis zu 0,5 Vol.-%, insbesondere bis zu 0,2 Vol.-%, vorzugsweise weniger als 0,1 Vol.-% zugelassen werden, zu ergeben. Spuren von Kohlenstoffdioxid (CO₂) und Stickoxiden (NOₓ) bis 1,5 Vol.-% können ebenfalls enthalten sein.

Beispielsweise bei der Verwendung von Erdgas können die Anteile des Hauptbestandteils Methan variieren und damit auch weitere Bestandteile, wie zum Beispiel Ethan, Propan, Ethen und Butan einzeln oder kombiniert umfassen.

Zusätzlich oder alternativ kann Hüttengas, beispielsweise enthaltend oder bestehend aus einer oder mehrerer der Komponenten Koksgas, Gichtgas, Konvertergas, Einschmelzergas etc., neben Wasserstoff als Brenngas berücksichtigt werden.

Die Brenner können mit einer Luftzahl zwischen 0,75 und 1,25 betrieben werden. Die Luftzahl kann insbesondere zwischen 0,75 bis 0,99, insbesondere zwischen 0,80 bis 0,98, vorzugsweise zwischen 0,85 bis 0,97, bevorzugt zwischen 0,90 bis 0,96, um die Anwesenheit von Sauerstoff(-Verbindungen) im Rauchgas zu vermeiden, oder alternativ zwischen 1 und 1,25, insbesondere zwischen 1,01 bis 1,20, vorzugsweise zwischen 1,02 bis 1,15, bevorzugt zwischen 1,05 bis 1,10, um die Sauerstoffmenge im Rauchgas zur gezielten Verzunderung, beispielsweise bei bestimmten Produkten, zu steuern, betragen.

Als sauerstoffhaltiges Gas für den Betrieb der Brenner kann Luft, beispielsweise Umgebungsluft, Sauerstoff oder eine Kombination aus Luft und Sauerstoff verwendet werden. Das sauerstoffhaltige Gas und/oder das Brenngas können vor der Zuführung zur Verbrennung vorgewärmt werden, um die Energieeffizienz zu steigern, beispielsweise auf mindestens 200 °C, insbesondere auf mindestens 300 °C, vorzugsweise auf mindestens 400 °C. Das Vorwärmen kann beispielsweise auf maximal 1000 °C begrenzt sein. Das Vorwärmen des Brenngases und/oder des sauerstoffhaltigen Gases kann zu einer Erhöhung der adiabaten Flammentemperatur führen.

Auch der eventuell benötigte Sauerstoff zum Verbrennen kann ebenfalls mittels Elektrolyse durch erneuerbare Energien (Sonne, Wind, Wasser etc.) erzeugt und bereitgestellt werden.

Näher erläutert wird die Erfindung anhand der folgenden Ausführungsbeispiele in Verbindung mit der Zeichnung.

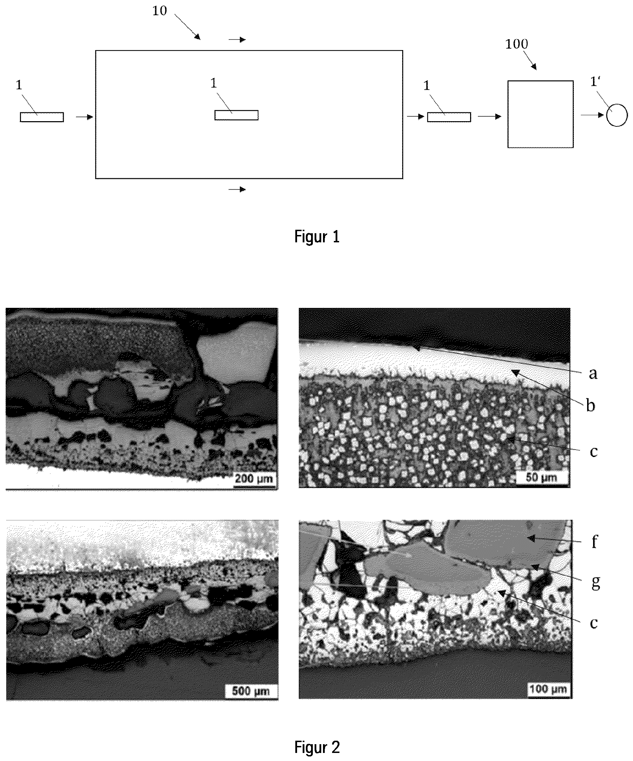

Die Zeichnung zeigt die Erfindung am Beispiel einer schematisch dargestellten Illustration. Figur 1 zeigt einen Ofen (10) zum Durchwärmen eines Stahlprodukts (1) auf Formgebungshitze. Der Ofen (10) kann als Hubbalkenofen oder Stoßofen oder Rollenherdofen zur Aufnahme und Durchwärmen von Brammen, Blöcken, Scheiben, Knüppeln oder Schmiedeteilen ausgelegt sein. Der Ofen (10) weist eine direkt befeuerte Ofenkammer oder einen direkt befeuerten Teilabschnitt einer Ofenkammer auf. Die direkt befeuerte Ofenkammer oder der direkt befeuerte Teilabschnitt der Ofenkammer des Ofens (10) umfasst mehrere nicht dargestellte Brenner, welche mit einem nicht dargestellten Brenngas mit einem Anteil von 0 Vol.-%, insbesondere mindestens 10 Vol.-% bis 100 Vol.-% Wasserstoff und/oder Ammoniak und einem nicht dargestellten sauerstoffhaltigen Gas beaufschlagbar sind und daraus ein Rauchgas erzeugt wird, welches die Ofenkammer oder den Teilabschnitt der Ofenkammer füllt.

Figur 1 zeigt ferner, dass das durcherwärmte Stahlprodukt (1) beispielsweise in Form einer Bramme, aus dem Ofen (10) entnommen und einer Weiterverarbeitung, beispielsweise einer Warmwalzstraße (100) zum Warmwalzen, zugeführt werden kann, um ein Warmband (1') zu erzeugen.

Vor dem Eintreten in die direkt befeuerte Ofenkammer oder in den direkt befeuerten Teilabschnitt der Ofenkammer wird auf die Oberfläche des Stahlprodukts zumindest abschnittsweise eine Schicht mit hygroskopischen Feststoffen enthaltend oder bestehend aus Silikaten, Oxiden oder Mischungen daraus aufgetragen, insbesondere mittels hier nicht dargestellt Einheiten zum Auftragen.

Untersuchungen im Labormaßstab wurden in einem gasbetriebenen Ofen mit einer Ofenkammer durchgeführt, wobei 100 Vol.-% Wasserstoff als Brenngas mit Luft und einer Luftzahl von ca. 1,05 im Brenner verbrannt wurden und dadurch resultierte eine Ofenatmosphäre mit einem hohen Wasserdampfpartialdruck. Gemessen wurde eine Ofenfeuchte mit einem Taupunkt von ca. 75 °C.

Zwei dicke Stahlproben mit jeweils einer Abmessung 10 x 10 x 4 in cm, herausgeschnitten aus einer konventionell vergossenen Bramme, wurden bereitgestellt, wovon eine Probe mit Aluminiumoxid in einer wässrigen Suspension mit einer Teilchengröße zwischen 101 und 1000 µm und einer Konzentration von 900 g/l, Rest Wasser und unvermeidbare Verunreinigungen, vollflächig mit einer Dicke von 500 µm mittels eines Farbrollers von Hand aufgetragen und anschließend an Luft getrocknet wurde. Die Proben wurden im Ofen wärmebehandelt und jeweils mit einer Temperatur von ca. 1000 °C entnommen. Die Verweilzeit betrug bei beiden Proben ca. 120 Minuten. Nach Entnahme der Proben wurden diese zur Analyse mittels Lichtmikroskopie fachüblich präpariert.

Figur 2 zeigt im oberen Teil zwei REM-Aufnahmen in unterschiedlichen Auflösungen an der unbehandelten verzunderten Probe und im unteren Teil zwei REM-Aufnahmen in unterschiedlichen Auflösungen an der verzunderten Probe nach einem erfindungsgemäßen Auftragen einer Schicht, enthaltend bzw. bestehend aus Aluminiumdioxid. Zu erkennen ist, dass sich auf unbehandelten verzunderten Stahlprodukt eine im Wesentlichen vollflächig deckende Schicht aus Hämatit (a) auf der Schicht aus Magnetit (b) und Wüstit (c) ausgebildet hatte. Das erfindungsgemäß behandelte Stahlprodukt wies hingegen eine im Vergleich zur unbehandelten Oberfläche geänderte Zunderstruktur auf, mit eingelagerten Phasen, enthaltend Al + 0 (f) und Al + Fe + O (g) in der Schicht aus Wüstit (c). Eine derartige Zunderstruktur ließ sich im Anschluss an die Untersuchung mit konventionellen und auch standardmäßig zum Einsatz kommenden bekannten Mitteln relativ einfach abtragen.

Das Wärmebehandeln von Stahlprodukten auf Formgebungshitze mit erhöhtem Wasserdampfpartialdruck in der Ofenatmosphäre führt aufgrund zumindest anteilsmäßiger Verbrennung von Wasserstoff und/oder Ammoniak im Brenngas, wie erwartet, zu einem dominanten Zunderaufbau auf dem Stahlprodukt. Durch das Vorsehen einer zumindest abschnittsweisen Schicht mit hygroskopischen Feststoffen enthaltend oder bestehend aus Silikaten, Oxiden oder Mischungen daraus kann der Zunderaufbau positiv in einer Ofenatmosphäre mit einem hohen Wasserdampfpartialdruck beeinflusst werden. Dadurch kann die darauffolgende bestehende Prozesskette ohne Einschränkungen weitergenutzt werden, wie zum Beispiel durch konventionelle Zunderwäscher in einem (Warm-) Warmwalzwerk.

## Patentansprüche

1. Verfahren zum Wärmebehandeln eines Stahlprodukts (1) auf Formgebungshitze, wobei das Wärmebehandeln des Stahlprodukts (1) in einem Ofen (10) mit einer direkt befeuerten Ofenkammer oder mit einem direkt befeuerten Teilabschnitt einer Ofenkammer durchgeführt wird, wobei die Temperatur des Stahlprodukts (1) beim Entnehmen aus dem Ofen (10) zwischen 950 °C und 1400 °C beträgt, wobei der Ofen mehrere Brenner umfasst, welche mit einem Brenngas mit einem Anteil von 0 Vol.-% bis 100 Vol.-% Wasserstoff und/oder Ammoniak und einem sauerstoffhaltigen Gas betrieben werden und daraus ein Rauchgas erzeugt wird, welches die Ofenkammer oder den Teilabschnitt der Ofenkammer füllt, **dadurch gekennzeichnet, dass** vor dem Eintreten in die direkt befeuerte Ofenkammer oder in den direkt befeuerten Teilabschnitt der Ofenkammer auf die Oberfläche des Stahlprodukts zumindest abschnittsweise eine Schicht mit hygroskopischen Feststoffen, enthaltend oder bestehend aus Silikaten, Oxiden oder Mischungen daraus aufgetragen wird.

2. Verfahren nach Anspruch 1, wobei die Feststoffe in einer wässrigen Suspension mit einer Teilchengröße zwischen 1 und 100 µm aufgetragen werden.

3. Verfahren nach einem der vorgenannten Ansprüche, wobei die Feststoffe in einer wässrigen Suspension mit einer Teilchengröße zwischen 101 und 1000 µm aufgetragen werden.

4. Verfahren nach einem der vorgenannten Ansprüche, wobei die Feststoffe in einer Konzentration von 30 g/l bis 2000 g/l, Rest Wasser und unvermeidbare Verunreinigungen aufgetragen werden.

5. Verfahren nach einem der vorgenannten Ansprüche, wobei an dem Stahlprodukt nach dem zumindest abschnittsweisen Auftragen der Schicht und vor dem Eintreten eine Trocknung durchgeführt wird.

6. Verfahren nach einem der vorgenannten Ansprüche, wobei kohlenstoffbasierte Lösungsmittel wie Öle, Alkohole, Stärke, Zellulose oder Mischungen daraus aufgetragen werden, in welchen die hygroskopischen Feststoffe dispergiert sind.

7. Verfahren nach einem der vorgenannten Ansprüche, wobei klebstoffbasierte Lösungen, enthaltend oder bestehend aus Epoxidharz, Polyurethan, Acrylat, Silikon, Kautschuk oder Mischungen daraus aufgetragen werden, in welchen die hygroskopischen Feststoffe dispergiert sind.

8. Verfahren nach einem der vorgenannten Ansprüche, wobei Wasserstoff und/oder Ammoniak im Brenngas mit einem Anteil von mindestens 20 Vol.-% enthalten ist.

9. Verfahren nach einem der vorgenannten Ansprüche, wobei Wasserstoff und/oder Ammoniak im Brenngas mit einem Anteil von mindestens 50 Vol.-% enthalten ist.

10. Verfahren nach einem der vorgenannten Ansprüche, wobei Wasserstoff und/oder Ammoniak im Brenngas mit einem Anteil von mindestens 70 Vol.-% enthalten ist.

11. Verfahren nach einem der vorgenannten Ansprüche, wobei das auf Formgebungshitze wärmebehandelte Stahlprodukt (1) einem Warmwalzen (100) zugeführt wird.

12. Verfahren nach einem der Ansprüche 1 bis 10, wobei das auf Formgebungshitze wärmebehandelte Stahlprodukt (1) einem Schmieden zugeführt wird.
